# EUROPEAN PATENT SPECIFICATION

(11) **EP 1 497 098 B1**
(45) Date of publication and mention of the grant of the patent: **17.01.2007**
(21) Application number: 03723510.8
(22) Date of filing: 15.04.2003
(51) Int. Cl.: B29C 45/44, B65D 1/22

(54) **COLLAPSIBLE CONTAINER FROM PLASTIC, AND METHOD AND MOLD FOR THE MANUFACTURE THEREOF**
ZUSAMMENKLAPPBARER KUNSTSTOFFBEHÄLTER UND VERFAHREN UND FORM ZU SEINER HERSTELLUNG
CONTENANT EN PLASTIQUE PLIABLE, PROCEDE ET MOULE POUR LA FABRICATION DE CELUI-CI

(30) Priority: 15.04.2002 NL 1020391
(43) Date of publication of application: 19.01.2005
(73) Proprietor: I-Pac Patents B.V., 2909 LC Capelle a/d IJssel (NL)
(72) Inventor: HOOGLAND, Hendricus, Antonius, NL-1562 ZM Krommenie (NL)
(74) Representative: Winckels, Johannes Hubertus F.
(86) International application number: PCT/NL2003/000285
(87) International publication number: WO 2003/086735

(56) References cited:
- EP-A- 0 711 709
- FR-A- 2 259 693
- FR-A- 2 279 624
- GB-A- 2 331 982
- GB-A- 2 367 283
- US-A- 4 896 787
- US-A- 5 281 385
- US-A- 5 524 789
- US-A- 6 059 558

## Description

The invention relates to a collapsible container. In particular, the invention relates to a collapsible container provided with a bottom and sidewalls, whose sidewalls are pivotally connected to the bottom.

For packaging products, box-shaped containers of the set-up box type or the ready-for-use-carton type are used. These containers have the drawback that, prior to use, they are to be folded and glued together. Moreover, the options for use for cardboard boxes are limited, for instance in that the cardboard has poor moisture resistance. It is true that it is known to coat cardboard with a moisture resistant layer, preferably on both sides, but, as a result, the cardboard becomes relatively expensive. Moreover, this has as a drawback that the cardboard is no longer a mono-material and therefore leads to waste disposal problems.

Further, it is known to manufacture containers such as boxes or bottles in one piece, for instance from plastic or glass. However, this has as a drawback that the manufacture may be expensive and that the containers take up relatively much space in empty condition, both prior to and after use.

It is further known to manufacture plastic containers such as folding crates, the sidewalls of which are pivotable relative to the bottom such that the sidewalls can be pivoted against the bottom or against each other, so that the volume of the containers can be considerably reduced. Four sidewalls are then manufactured separately and intercoupled with the aid of a frame or the like, while the frame is connected to the bottom. Such containers are expensive and vulnerable as a result of the many parts. Further, such containers also have the drawback that they are limitedly usable, in particular also in that the parts are manufactured separately and coupled, so that the containers are not liquid-tight. This also holds if the walls are pivotally connected to the bottom but are to be intercoupled when folding out the container, which couplings are to be detached when folding the container in again. Moreover, due to the coupling means, such containers are vulnerable.

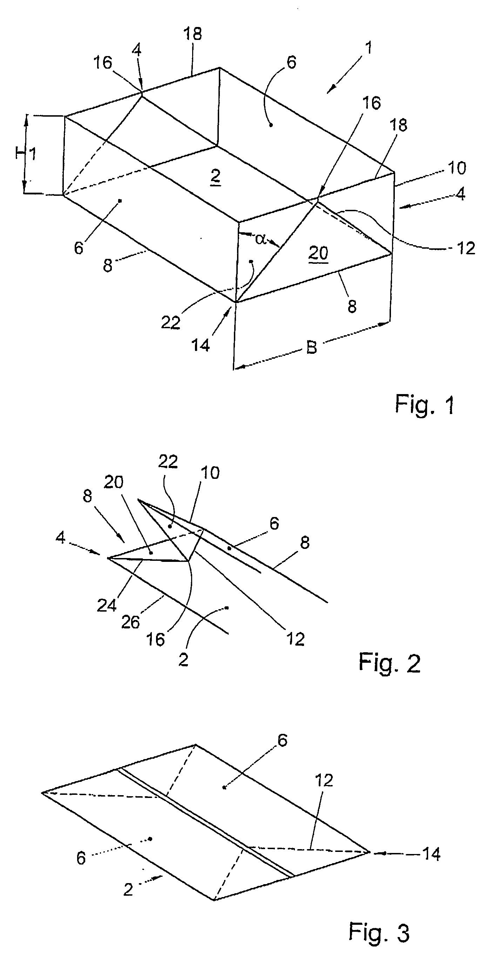

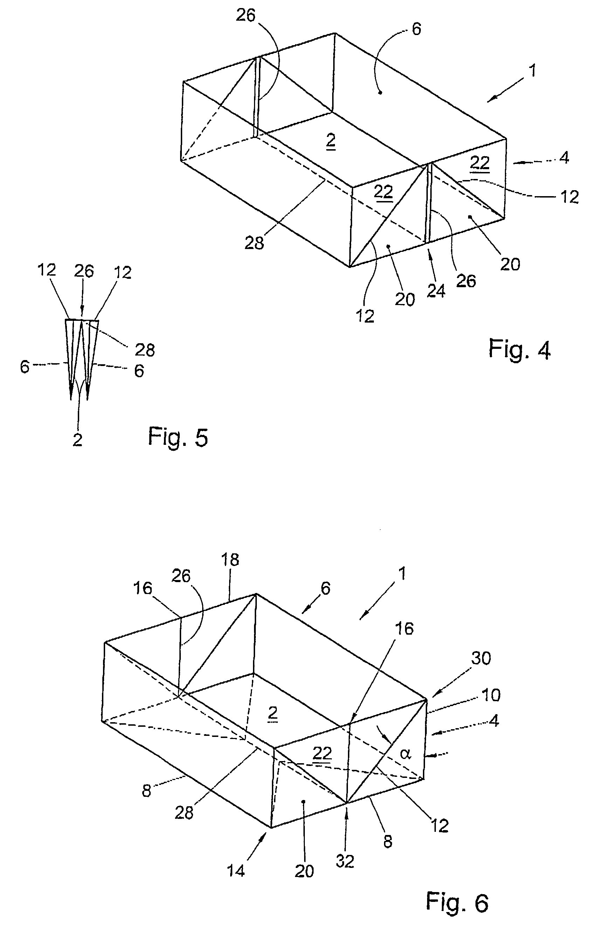

EP 0 711 709 discloses a collapsible container made of a rigid material such as plastic, having a bottom and side walls connected to said bottom and each other by hinge means, whereas at least in two opposite side walls further hinge means are provided for allowing said side walls to collapse against each other and the bottom, see Figure 4. Said containers may be made in a flat condition, comprising coupling means for coupling different parts to each other, allowing the container to be set up to a three dimensional shape. This document does not disclose any means for manufacturing the containers.

The invention contemplates a collapsible container of the above-mentioned type, wherein disadvantages of the known containers are obviated while maintaining the advantages. To that end, a container according to the invention is characterized by the features of claim 1.

In a container according to the invention, sidewalls of the container are pivotally connected to the bottom, while, moreover, the sidewalls are also mutually pivotally connected. In at least two sidewalls, means are provided such that these are at least partly foldable. As a result, the sidewalls can be pivoted in the direction of or even virtually against the bottom without the sidewalls having to be detached from each other. The containers can be manufactured in one piece and in one go so that further assembly operations can be dispensed with. Moreover, as the sidewalls and the bottom are mutually pivotally connected, folding out is possible in a particularly simple manner. Further, such containers can be designed to be liquid-tight and even gas-tight in a simple manner, so that virtually universal applicability is obtained.

Containers according to the invention can be manufactured in different sizes, with different folding mechanisms, depending on, inter alia, the desired ratios between width, length and height, desired fields of application, goods to be packaged and the like.

In a first further elaboration, a collapsible container according to the invention is further characterized by the features of claim 3.

In such an embodiment, in opposite first sidewalls triangular wall surfaces are bounded by hinging elements such that the respective sidewalls are somewhat foldable, so that, in a particularly simple manner, the desired collapsibility is obtained.

In a further more detailed embodiment, a collapsible container according to the invention is further characterized by the features of claim 4.

By providing the recited fourth hinging elements and fifth hinging elements, the advantage is achieved that not only the sidewalls of a container according to the invention can be pivoted in the direction of the bottom, but also, that the bottom can be folded, thereby yielding an even more compact folded-together condition.

If, in each first sidewall a first and a second wall surface are defined as further described in claim 5, it is preferred that the first wall surface be an equilateral triangle. With it, a sidewall extending in folded-out condition approximately at right angles to the bottom can simply be pivoted to a position against the bottom. In more general sense, it is preferred that the hypotenuse of this triangle, i.e. the or each third hinging element, be provided at an angle such that the sidewalls can be folded approximately flat against each other and/or the bottom. The second wall surface can then also be a substantially equilateral triangle, for instance when the height of at least the second sidewall is approximately equal to or smaller than half the width of the bottom, while the second wall surface can also be trapezoidal and extends to a point at a relatively large distance from the bottom. In such an embodiment, it is preferred that, as described earlier, the bottom be foldable about the fifth hinging element so that a relatively high container with a height which is greater than the length and/or half the width of the bottom can be folded so as to be flat.

Further, it is preferred that in the bottom adjacent the or each fifth hinging element, sixth hinging elements be provided, extending from angular points of the bottom and intersecting approximately on a line defined by the or each fifth hinging element, the arrangement being such that triangular bottom surfaces are thereby enclosed, preferably of a substantially equilateral triangular shape, at least with a hypotenuse dividing the respective angle of the bottom approximately in two, thus yielding a particularly compact manner of folding.

With a collapsible container according to the invention, the hinging elements are preferably of liquid-tight and/or gas-tight design, for instance as integrated living hinges or film hinges, which can be integrally injection molded in the same plastic, or can be inserted as inserts and are at least partly enveloped by the plastic of the bottom and/or sidewalls. As a result, particularly suitable containers can be obtained in which many different sorts of products can be packaged.

In a preferred embodiment, the outside of the container, at least in folded-out condition, is smooth, in particular at the location of the hinging elements. Thus, the advantage is achieved that a particularly attractive finish is obtained and that, moreover, the possibility is afforded to provide the containers in a simple manner at the outside with prints, film finish layers or the like, in particular through the use of in-mould-labeling techniques. Conversely, in an alternative embodiment, the inside of the container is relatively smooth, so that contamination can be prevented and cleaning, for instance sterilization, is possible in a simple manner.

With a collapsible container according to the invention, the bottom can simply ascend somewhat towards the center, for instance as indicated in claim 18, such that a larger bearing capacity is obtained than with a flat bottom. If load is placed in the container on the bottom, this will be slightly forced in the direction of a flat condition, so that a part of the bearing capacity is offered by the sidewalls and/or first hinging elements. Moreover, thus, focused folding-in can be further improved. On both sides of a fifth hinging element or sixth hinging elements in the bottom, projections, ridges or the like can be provided in a simple manner which, in folded-out condition, abut each other for further increasing the load bearing capacity.

The invention further relates to a mold for manufacturing a collapsible container, characterized by the features of claim 19. With such a mold, through injection molding, easily and readily, one-piece collapsible containers can be manufactured which emerge from the mold in substantially folded-out condition They are virtually directly ready for use. In principle, assembly operations are not necessary.

The invention further relates to a method for forming collapsible containers, characterized by the features of claim 21.

Such a method offers the advantage that, in principle, without assembly operations, foldable containers can be obtained which have a particularly large area of applicability. With such a method, containers of all sorts and sizes can be manufactured which can be folded so as to be particularly compact.

Further advantageous embodiments of a container, mold and method according to the invention are given in the subclaims. In clarification of the invention, exemplary embodiments will be further elucidated with reference to the drawing. In the drawing:
Fig. 1 shows a container according to the invention in perspective view;
Fig. 2 shows a part of a container according to Fig. 1 during a folding-in or folding-out movement;
Fig. 3 shows a container according to Figs. 1 and 2, in folded-in condition;
Fig. 4 shows a container according to the invention in a first alternative embodiment;
Fig. 5 shows, in side view, a container according to Fig. 4 in folded-in condition;
Fig. 6 shows a third embodiment of a container according to the invention, in folded-out condition comparable to Figs 1 and 4;
Fig. 7 shows the container according to Fig. 6, in partly folded-in or folded-out condition;
Fig. 8 shows a container according to Figs. 6 and 7 in virtually completely folded-in condition;
Fig. 9 shows, in side view, a part of a container according to Figs. 6 - 8;
Fig. 10 shows a container according to Fig. 6 in partly folded-in or folded-out condition, in a second manner of folding;
Fig. 11 shows the container according to Fig. 10, in partial side view, in folded-in condition;
Fig. 12 shows, in top plan view, a bottom of a container according to Figs. 6 - 11;
Fig. 13 shows, in side view, a wall of a container according to the invention, in particular according to Figs. 6 - 11, in relatively low design with ascending bottom;
Fig. 14 shows, in side view, comparable to Fig. 13, a container according to the invention, with relatively high sidewalls;
Fig. 15 shows a container according to the invention with dividing wall;
Fig. 16 shows a container according to the invention with relatively low sidewalls;
Figs. 17 and 18 schematically show, in cross-sectional view, pivoting means for a container according to the invention;
Figs. 19 - 21 schematically show, in cross-sectional side view, a mold according to the invention, in three consecutive steps in the manufacture of such a container; and
Figs. 22 - 24 show, somewhat enlarged, a detail of a mold according to the invention in an alternative embodiment.

In this description and the drawings, exemplary embodiments of the invention are represented which should not be taken as being limitative in any way. The invention is described on the basis of a substantially rectangular container, at least a container with a rectangular bottom surface. Naturally, this can also be quadrangular, while, moreover, multiangular bottom surfaces can be used, for instance hexagonal, octagonal or dodecagonal surfaces, without departing from inventive concept. The containers included in this description are all, according to the invention, formed in one piece through injection molding, while, however, prior to insertion into the mold, plastic inserts can be inserted, such as films for in-mold-labeling, films or such elements for forming film hinges, fastening means and the like, which are fixedly incorporated in the container by melting and/or enveloping through injection-molding.

In the exemplary embodiments shown, each time, substantially rectangular, box-shaped containers are shown, open to one side. However, it will be clear that, in a simple manner, other types of containers can be formed, while, moreover, lids can be provided for closure of the open sides mentioned. A lid can for instance be connected via a further integrated hinge to one of the sidewalls, in particular a non-foldable sidewall and can be designed so as to be easily collapsible, for instance in a manner comparable to that of the containers shown. Also, the container and lid can be manufactured separately, both designed as the containers shown in the Figures, such that a container serving as a lid can be slid upside-down over the container serving as a receiving means. If desired, handle bars, grips, points of engagement, windows, insertion compartments and the like can be formed so as to be integrated therein on sidewalls and/or the bottom of a container according to the invention, for instance for enhancing the portability, rigidity, identification or the like.

Fig. 1 shows a container 1 according to the invention, provided with a bottom 2, two first sidewalls 4 and two sidewalls 6 extending at right angles thereto. The first and second sidewalls 4, 6 are connected by integrated first hinging elements 8 to the longitudinal edges of the bottom 2 while, each time, a first sidewall 4 is connected to a second sidewall 6 via a second hinging element 10, also integrated. In the first sidewalls 4, third hinging elements 12 are provided which define folding lines including an angle α (with folded-out container 1) with the second hinging elements 10, for instance 45 degrees. The second hinging elements 12 reach from near an angular point 14 of the bottom 2 to a point near the middle 16 of the top longitudinal edge 18 of the respective first sidewall 4. In the exemplary embodiment shown, the height H1 of the sidewalls 4, 5 is equal to approximately half the width b of the bottom 2, which corresponds to the length of the first sidewall 4. Thus, the third hinging lines 12 divide the first sidewall 4 into a first triangular sidewall surface 20 and two second triangular sidewall surfaces 22 located on the opposite side of the third hinging means 12. The second sidewalls 6 are rectangular and cannot be folded together in the exemplary embodiment shown.

The first, second and third hinging means 8, 10, 12 are designed such that the centers 16 for folding-in the container 1 can be pushed towards each other, while they are automatically forced in the direction of the bottom 2. In Fig. 2, a part of a container 1 is shown, cross-sectioned along a plane through the centers 16 and the center of the bottom 2. It is clear that here, the center 16 of the respective first sidewall 4 is forced in the direction of the bottom 2, while a perpendicular bisector 24 through the center 16 is pivoted on the bottom 2 such that, with the container in collapsed condition as shown in Fig. 3, it extends along the axial line 26 of the bottom 2. The third hinging element 12 ends up resting diagonally on the bottom 2 while the second hinging element 10 ends up lying parallel to the first hinging means 8 of the first sidewall 4. Fig. 3 shows the container 1 according to Fig. 1 in folded-in condition, while the third hinging elements 12 are shown in broken lines.

In the embodiment shown in Fig. 1, the hinging means are designed such that the outsides of the container 1 can be designed so as to be virtually flat, so that they are hygienic and offer an attractive exterior. Moreover, thus, the advantage is achieved that the outside of the container can be finished in a simple manner, for instance through printing or, preferably, through the use of in-mold-labeling techniques. With these, both the exterior and the barrier properties of the container can be improved, cleanability can be enhanced and like advantages can be achieved.

In Fig. 4, a container 1 is shown in a first alternative embodiment, which substantially corresponds to the one shown in Fig. 1. However, in this embodiment, along each perpendicular bisector 24 through the center 16 in each first sidewall 4, a fourth hinging element 26 is provided, so that two first sidewall surfaces 20 are obtained, on opposite sides of said fourth hinging element 26, below the third hinging elements 12. Again, two second sidewall surfaces 22 lie above the third hinging elements 12. In the bottom 2, along the axial line 26, a fifth hinging element 28 is provided, interconnecting the two fourth hinging elements 26. In the embodiment shown in Fig. 4, each fourth hinging element 26 is of relatively wide design or designed as two hinging elements placed at a short distance from each other. In this embodiment, the container 1 can be folded as represented in Figs. 2 and 3, whereupon, however, the folded-in container can be folded double from a condition as shown in Fig. 3 along the fifth hinging element 28 and the two fourth hinging elements 26 to a condition as shown in Fig. 5, so that an even more compact folded-in condition is obtained. The fourth hinging elements 26 are then folded over the fifth hinging element 28. It will be clear that it is also possible to fold a container 1 according to Fig. 4 from a position as shown in Fig. 3 such that the second sidewalls 6 come to abut against each other, while preferably, the fifth hinging element 28 in the bottom is designed to be relatively wide or with two parallel hinging lines located relatively close together, while the height of the sidewalls 4, 6 is chosen to be somewhat smaller than half the width of the bottom 2. With such an embodiment, the inside space of the container 1 in folded-in condition is even better protected from outside influences.

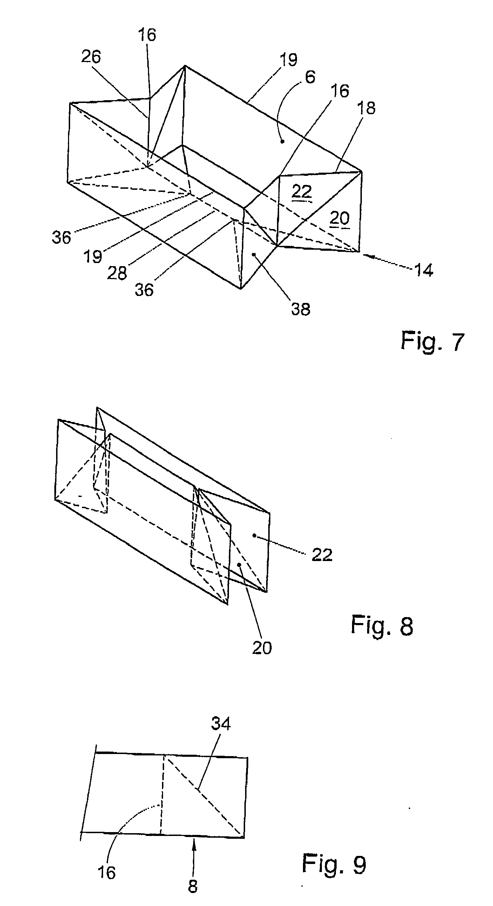

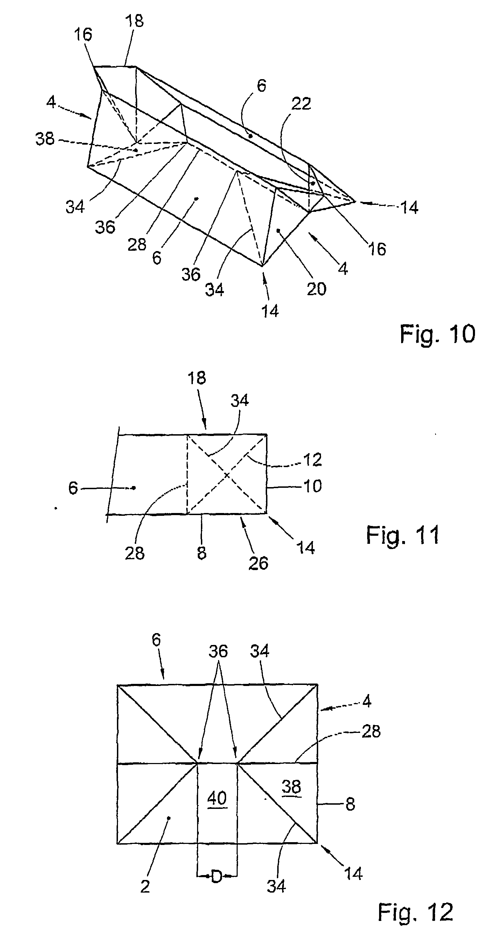

Fig. 6 shows a third embodiment of a container 1 according to the invention, again provided with a bottom 2 and first and second sidewalls 4,6 connected thereto via first hinging elements 8. Again, the height of the sidewalls 4, 6 is approximately equal to half the width of the bottom 2. In this embodiment, again, second hinging elements 10 are provided as well as fourth hinging elements 26 and a fifth hinging element 28, all as described with reference to Fig. 4. However, in this embodiment, third hinging elements 12 extend diagonally from a top angular point 30 between a first and second sidewall 4, 6 and the center 32 of the first hinging element 8 connecting the respective first sidewall 4 to the bottom 2. Again, the second hinging elements 10 and third hinging element 12 include an angle α of, for instance, approximately 45 degrees. As shown in more detail in Fig. 12, in the bottom 2, four sixth hinging elements 34 are provided. Each sixth hinging element 34 reaches from a corner 14 of the bottom 2 to an intersection 36 on the axial line 28, at least the respective fifth hinging element 28. In the embodiment shown in Figs. 6 and 12, two intersections 36 are provided, at a mutual distance d, while, each time, a part of the fifth hinging element 28, a first hinging element 8 and a sixth hinging element 36 enclose a bottom wall surface 38 having approximately the same shape and size as the first sidewall surfaces 20.

A container 1 according to Fig. 6 can be folded-in in two different manners, represented in Fig. 7 - 9 and Fig. 10 - 11, respectively. The manner of folding-in substantially depends on the third hinging elements 12 being present or not and the design thereof. If the third hinging elements 12 are omitted or are designed such that the second sidewall surfaces 22 can only fold towards the inside space of the container 1 along the third hinging elements 12, the container 1 will fold in as shown in Figs. 7 - 9 while, when the second sidewall surfaces 22 can only fold outwards along the third hinging elements 12, the container 1 will fold in as shown in Figs. 10 and 11. In both embodiments, folding-in the container 1 can be easily initiated, for instance by moving the centers 16 of the top longitudinal edges 18 of the first sidewalls 4 in the suitable direction towards or away from each other, respectively, but folding-in can also be initiated by moving the part of the fifth hinging element 28 between the two intersections 36 upward, i.e., in the direction of the inside space of the container 1.

In Fig. 7, a partly folded-in container according to Fig. 6 is shown, where it is clear that the fifth hinging element 28 is moved upwards between the two intersections 36, while the centers 16 move towards each other such that the top longitudinal edges 19 of the second sidewalls 6 are pulled together. The bottom wall surfaces 38 will then be at an inclination. Upon further upward movement of this part of the fifth hinging element 28, the perpendicular bisectors 24, at least the fourth hinging elements 26, are moved towards each other approximately parallel. The same holds substantially for the second sidewalls 6. Upon still further movement of this portion of the fifth hinging element 28, the insides of the second sidewalls 6 are moved against the second bottom surface parts 40 located on opposite sides of the fifth hinging element 28 between the sixth hinging elements 34, while the outsides of the first sidewall surfaces 20 and the second sidewall surfaces 22 are moved against each other, while the insides of the first bottom surfaces 38 are moved against the inside of the first sidewall surfaces 20. Therefore, with the container 1 folded-in, the fifth hinging elements 28 extend parallel to the third hinging elements 12, if present, while the fourth hinging element 16 extends at right angles to the first hinging elements 8.

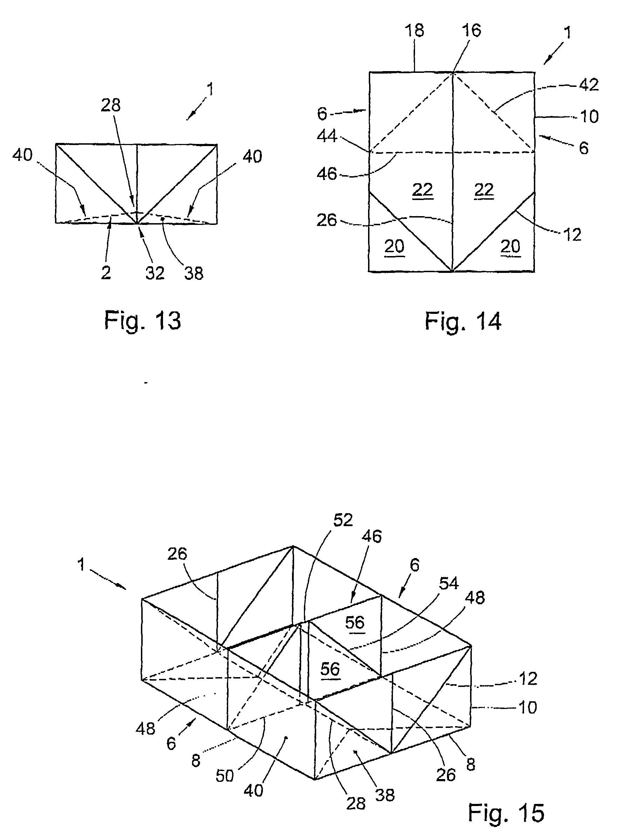

A container 1 according to Fig. 6, with a manner of folding according to Figs. 7 - 9, offers the advantage that the sidewalls 4, 6 can be designed to be relatively high, for instance as shown in Fig. 14. In this embodiment, the first sidewall surfaces 20 have a triangular shape, in particular approximately an equilateral triangle with angles of approximately 45 degrees. The second sidewall surfaces 22 are then substantially trapezoidal. It will be clear that the sidewalls 4, 6 can also have different shapes and, for instance, can incline inwards and/or outwards, while the position of the hinging elements, and hence of at least the triangular sidewall surfaces 20, is modified.

In Fig. 14, in interrupted lines, two alternative seventh folding lines 42 are shown, extending from the center 16 of the top longitudinal edge 18, in an inclining manner, as far as the second hinging element 10. In the second sidewall 6, eighth hinging elements 44 are provided, connecting two seventh hinging elements 42. As a result, the wall parts of the second sidewall 6 extending above the eighth hinging elements 44 can be folded-in as a lid, the first sidewall 4 folding inwards along the ninth folding line 46. Thus, a one-piece, completely closeable container 1 can be obtained.

In Fig. 10, the earlier mentioned alternative manner of folding for a container 1 according to Fig. 6 is shown, in which the centers 16 of the top longitudinal edges 18 of the first sidewalls 4 are pushed away outwards while the part of the fifth hinging element 28 extending between the intersections 36 is pushed upwards for folding together the bottom 2. In this embodiment, the second sidewalls 6 pivot towards each other while the centers 16 are moved downwards and outwards to a point where they end up lying between two angular points 14, with the first and second sidewall surfaces 20, 22 abutting against each other by their outsides while the insides of the second sidewall surfaces 22 abut against each other. Thus, a flatly folded-in container is obtained. In Fig. 11, in side view, a part of a container 1 according to Fig. 10 is shown, in folded-together condition with, therein, in interrupted lines the different hinging elements.

In Fig. 13, schematically, in side view, a container 1 according to Fig. 6 is shown, with modified bottom 2. In this embodiment, the bottom 2 is dimensioned such that the part of the fifth hinging element 28 located between the intersections 36 lies somewhat higher than the centers 32. The first and second bottom surfaces 38, 40 are then at a slight inclination. Due to such a configuration of the bottom, which can, for instance, be substantially pyramidal, the load bearing capacity is enhanced. The fact is that then, the fifth hinging element 28 will want to push downwards, so that a large part of the force is guided away sideways by the bottom surfaces 38, 40. On both sides of the fifth hinging element 28, projections, ridges or the like can be integrated by injection-molding which, with the container in folded-out condition, abut against each other, to further increase the bearing capacity.

In Fig. 15, a container 1 according to the invention is shown in a further alternative embodiment, which container 1, as to structure, substantially corresponds to that of Fig. 6. The same parts have the same reference numerals. In this embodiment, a dividing wall 46 is provided, which extends between the two second sidewalls 6. Via ninth hinging elements 48, the dividing wall is connected to the second sidewalls 6, via tenth hinging elements 50 to the bottom surfaces 40, and is provided in the center with a tenth hinging element 52, parallel to the fourth hinging elements 26, at right angles to the fifth hinging element 28. From the intersection between the eighth and ninth hinge line on the first hinge line 8, on both sides of the tenth hinging element 52, an eleventh hinging element 54 extends as far as the end of the tenth hinging element 52 remote from the bottom. When folding-in the container 1 as described earlier with reference to Figs. 6 - 11, the dividing wall 46 folds in such that the tenth hinging element 52 rests on the fifth hinging element 28, while the triangles 56 located on opposite sides of the eleventh hinging elements 54 are folded against each other and will come to rest on the bottom surface 40.

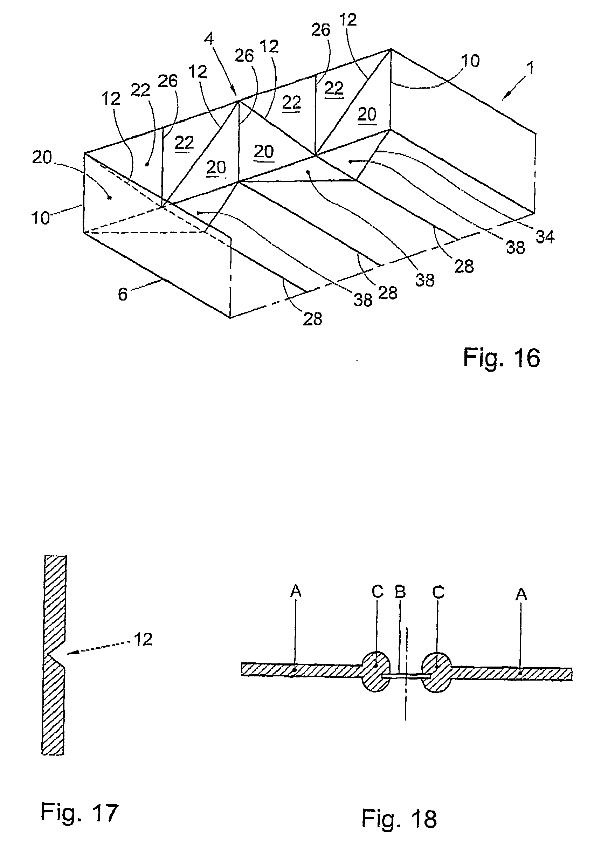

In Fig. 16, a further alternative embodiment of a container 1 according to the invention is shown, again comparable to a container according to Fig. 6, wherein, however, in the sidewall 4 three fourth hinging elements 26 are provided, parallel to each other and to the second hinging elements 10, while, each time, between a second hinge line 10 and a fourth hinge line 26 or between two second hinge lines 26, respectively, third hinging elements 12 are provided, forming first and second sidewall surfaces 20, 22. The third hinging elements 12 form a corrugated profile. In the bottom 2, three fifth folding lines 28 are provided parallel to each other, and four sixth folding lines 34, enclosing four first bottom surfaces 38. The container 1 according to Fig. 16 can be compared to two containers according to Fig. 6 arranged next to each other, while the second sidewalls 6, abutting in such a construction, are omitted. Such a container can be folded together in a comparable manner, the middle fifth hinging element 28 remaining in its place and the two sidewalls 6 being moved towards each other in that the two remaining fifth hinging elements 28 are moved upwards, resulting in the earlier described collapse. It will be clear that in a comparable manner, also wider, low containers can be designed.

In Fig. 17, schematically in cross-sectioned view, a hinging element according to the invention is shown, here, for instance, a hinging element 12.

In Fig. 18, a film hinge is shown, wherein between two wall parts a relatively flexible strip b is included, which, for instance, has been laid in a mold as an insert, and injection molded at both sides, in Fig. 18 shown as molded-in in end edges c of a substantially circular cross-section. In this embodiment, the wall parts 1 can be pivoted to a position extending substantially parallel, whereby the end edges c are rolled along the film b, such that pivoting is possible in a simple manner and a relatively pivoted-in position is obtained. Preferably, the end edges c abut against each other when the wall parts a extend approximately parallel to each other, so that an even better confinement is obtained. Naturally, the end edges c can also have any other suitable shape and the strip b can also be attached in a different manner or, optionally, be integrally injection-molded.

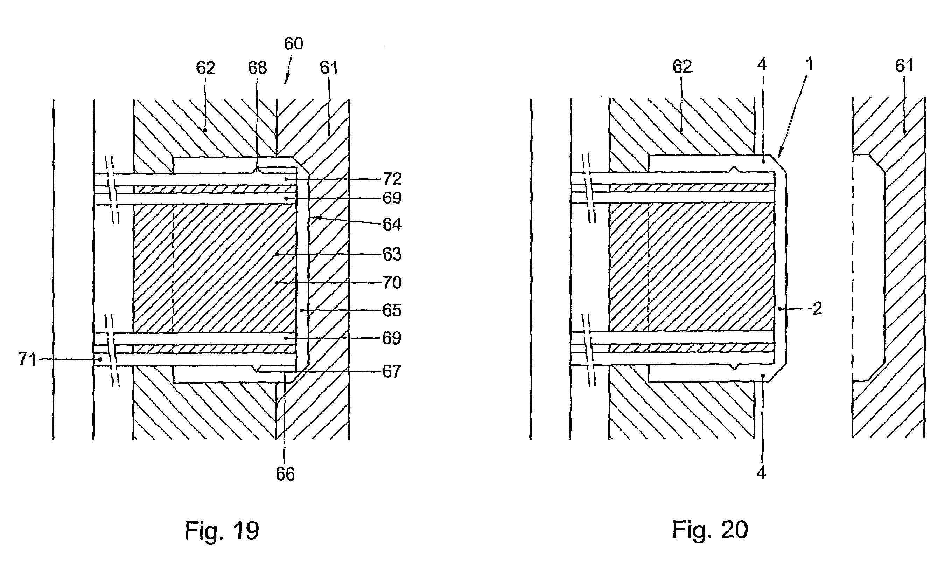

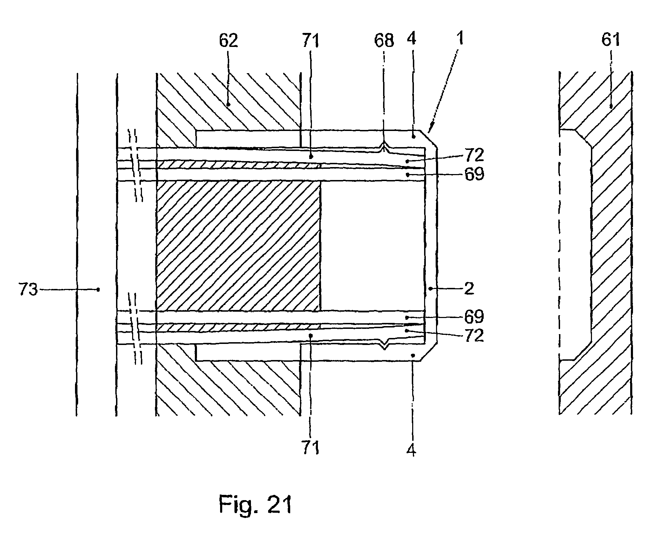

In Figs. 19 - 21, schematically, a mold according to the invention is shown, for forming a collapsible container. This mold 60 comprises a first mold part 61 and a second mold part 62, as well as a core 63. In closed condition as shown in Fig. 19, the mold parts 61, 62 and core 63 define a mold cavity 64 in which a container 1 according to the invention can be injection-molded. The mold cavity 64 comprises a bottom forming part 65 and a number of sidewall forming parts 66, connected to the bottom forming parts 65 via first hinging element forming parts 67. The core 63 comprises hinging element forming parts 68 which extend into the sidewall forming parts 66, in particular into the parts forming the first sidewalls. The cross-section through the mold 60 shown in Figs. 19 - 21 is taken, for instance, at two thirds of the width of the container, the hinging element forming parts 68 being arranged for forming the third hinging elements 12, viewed in the direction of the nearest second sidewall. In this mold 60, the core 63 is provided with ejector pins 69, a central core part 70 through which the ejector pins reach, and, on opposite sides of the central core part 70, core edge parts 71 which substantially define a wall of the sidewall forming part 66, at least for the first wall parts 4. The parts 68 are non-withdrawable. This means that without further measures, the container 1 is not detachable from the core 63. In order to prevent this drawback, the core edge parts 71 are manufactured such that they are biased at least at their free ends 72 in the direction of the ejector pins 69, at least the central core part 70. This is clearly shown in Fig. 21, wherein the free ends 72 are bent towards each other such that a withdrawable mold is obtained. This is achieved as follows.

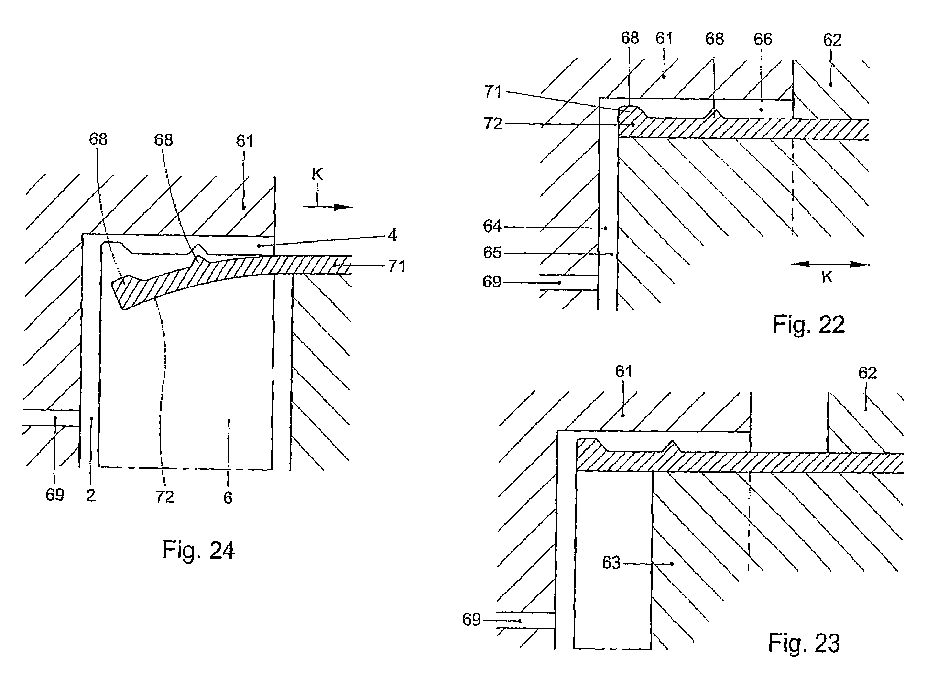

In Fig. 20, after in the mold cavity 64 a container 1 in folded-out condition has been formed, with bottom 2 and sidewalls 4,6, the first mold part 61 is moved away from the second mold part 62. The container 1 is retained on the core 63, partly within the second mold part 62. Then, the ejector pins 69 together with the core edge parts 71 are moved forwards by an ejector plate 73, while taking along the container 1. By moving the ejector pins 69 and the core edge parts 71 sufficiently far from the core 73, the core edge parts 71 are free to move inwards with their free ends 72, in the direction of the ejector pins 69. The core edge parts 71 can, for instance, be manufactured from spring steel and be biased inwardly or be pulled inwards by means of guiding pins, rod assemblies or the like. Thus, the hinging element forming parts 68 are freed from the first sidewalls 4, so that the product can be withdrawn and can be taken from the mold or can fall due to gravity when the ejector pins 69 and the core edge parts 71 are withdrawn. It is preferred that then the ejector pins 69 can move further outwards than the core edge parts 71, so that the product 1 can fall from the ejector pins 69, preferably under the influence of gravity. Then, the mold is closed again and it is ready for a container to be newly formed. In Figs. 22 - 24, a part of a comparable mold is shown, again with a first mold part 61 and a second mold part 62, moveable relative thereto. Core edge parts 71 are again provided on two opposite sides of a core 63. In this embodiment, the core 63 is fixedly connected to the second mold part 62 and the mold cavity 64 is substantially included in the first mold part 61. Again, the mold edge parts 71 are biased in a direction facing each other, at least as far as the free edges 72 are concerned. Again, hinging element forming parts 68 are provided, for, for instance, forming first and third hinging elements.

After a product such as a container 1 has been formed in the closed position in the mold cavity 64 as shown in Fig. 22, the mold is opened by moving apart first and second mold parts 61, 62 as shown in Fig. 23. The core 63 is then pulled away between the mold edge parts 71. If the core 63, as shown in Fig. 23, has been moved away relatively far from the bottom 2 of the container 1, the free edges 72 of the cored edge parts 71 move inwards, in the inside space of the container 1, so that the hinging element forming parts 68 move from the first sidewall 4, whereupon the second mold part 62 can be moved further in the direction K, so that the core edge parts 71 are substantially released from the container 1 and, for instance, can be pulled back along the core 63. Then the container 1 can be ejected from the mold cavity 64 with the aid of ejector pins 69 provided in the first mold part 61 and the mold can be closed again for a following product.

A container 1 according to the invention can be used one time and, after use, be thrown away but is preferably reused, to which end it is used in a so-called return system. The container is, for instance, injection-molded, filled with products, sent to an (end)user, where the products are taken out and the container is folded-in. Then, the container is sent back to the original user to be checked, or to a recycling company if the container is not suitable to be reused. The recycling company grinds the container, from which, subsequently, again, a container is formed. Thus, in an optimal manner, use is made of the material available.

The invention is not limited in any manner to the exemplary embodiment represented in the drawing and the description. Many variations thereon are possible within the framework of the invention as outlined by the claims.

For instance, containers can be formed having lower longitudinal edges, while, for instance, two fourth hinging elements 26 arranged at a distance from each other can be provided with connecting third hinge lines 12. Also, in an embodiment according to Fig. 1, the second sidewall surfaces 22 can be designed such that they do not touch near the middle 16, so that relatively low sidewalls 4, 6 can be used, at least a relatively wide bottom 2. In the exemplary embodiments shown, the hinging elements 8, 10, 12, 26, 28, 34, 42, 44, 46 are provided as straight, hinge line defining elements, in the form of recesses or film hinges, for instance as shown in Figs. 17 and 18. However, also other hinging elements can be used. For instance, if the closed character of the wall structure of the container, for instance for liquid-tightness, gas-tightness, hygiene and such is not of importance, the hinging elements can consist of thin bridges of plastic material between the different sidewall surfaces 20, 21, and/or bottom surfaces 38, 40. Also, the hinging elements can for instance be designed as creases or the like. A container according to the invention can be designed both in non-transparent and transparent plastic, as well as in opaque materials. Also, 2K injection-molding techniques can be used so that different parts of the container can be designed in different materials. For instance, some hinging elements can be designed in a more flexible plastic for obtaining an even better foldability. In containers according to the invention, for instance products can be stored, but they can also be used for, for instance, granulates, powders, liquids and the like. In particular when they are manufactured from one material, the containers can be processed in a simple manner, in particular in recycling flows since a mono packaging is involved. The containers can be supplied in a folded-in condition, be set up simply by hand or with a machine and be filled while, after use, the containers can simply be brought into a folded-in flat condition for further processing, for instance, return, waste or recycling.

## Claims

1. A collapsible container (1), wherein the sidewalls (4) are pivotally connected to each other and to the bottom (2) and wherein at least two sidewalls (4) of the container (1) are foldable, **characterized in that** the container is manufactured through injection-moulding from plastic having integrated hinges.

2. A collapsible container according to claim 1, provided with a bottom (2), and at least two first sidewalls (4) arranged opposite each other and two second sidewalls (6) arranged opposite each other, the first (4) and second walls (6) being connected to the bottom (2) via first hinging elements (8), while each time, a first sidewall (4) is connected to a second sidewall (6) by at least a second hinging element (10), wherein in at least two first sidewalls (4) hinging elements (12, 26) are provided, such that the first sidewalls (4) can be folded together at least partly and the second sidewalls (6) can be pivoted in the direction of the bottom (2) for folding up the container (1).

3. A collapsible container according to claim 1 or 2, wherein in the first sidewalls (4), by second hinging elements (10) and third hinging elements (12), substantially triangular wall surfaces (20) are bounded, wherein at least one fourth hinging element (26) is provided, extending, with the container (1) in folded-out condition, approximately at right angles to the bottom surface (2), and at least two third hinging elements (12) extending from near the intersection (16, 32) between the bottom surface or an upper edge of the first sidewall (4) and the or a third hinging element (12), which include an angle (α) with said bottom (2) and said fourth hinging element (26) and extend at least to a point near the adjacent second hinging element.

4. A container according to claim 3, wherein said fourth hinging elements (26) located in the oppositely located first sidewalls (4) are interconnected by a fifth hinging element (28) located in the bottom.

5. A collapsible container according to claim 3 or 4, wherein in each first wall (4) one fourth hinging element (26) is provided, while two third hinging elements (12) extend in opposite directions from the intersection of the bottom surface (2) or said upper edge and the respective fourth hinging element (26), such that the respective first sidewall (4) comprises at least one substantially triangular first wall surface (20, 22) on both sides of the fourth hinging element (26), enclosed by a second hinging element (10) and a first hinging element (8) or a fourth hinging element (26), while, moreover, on both sides of the fourth hinging element (26) a second wall surface (22, 20) is provided, at least bounded by the respective fourth hinging element (26) and a third hinging element (12).

6. A collapsible container according to claim 5, wherein each first wall surface (20, 22) is substantially an equilateral triangle.

7. A collapsible container according to claim 5 or 6, wherein each second wall surface is substantially a quadrangle and in particular has a trapezium-shape.

8. A collapsible container according to claim 5 or 6, wherein each first and each second wall surface (20, 22) is substantially triangular, in particular in the shape of an equilateral triangle.

9. A collapsible container according to any one of the preceding claims, wherein in the bottom (2) at least a fifth hinging element (28) is included, which substantially extends along a line between fourth hinging elements (26) and/or intersections (24, 32) between third hinging elements (12) and first hinging elements (8).

10. A collapsible container according to claim 9, wherein in the bottom (2) surface contiguous to the first hinging element (8), at the first sidewalls (4), two first bottom surfaces (38) are bounded each by a sixth hinging element (34), the respective first hinging element (8) and the fifth hinging element (28).

11. A collapsible container according to claim 10, wherein the first bottom surfaces (38) are substantially triangular, in particular have the shape of an equilateral triangle.

12. A collapsible container according to any one of claims 9 or 11, wherein near each first sidewall (4), in the bottom (2), two first bottom surfaces (38) are provided, each bounded by at least a sixth hinging element (34), which sixth hinging elements (34) intersect at an intersection (36) on the line (28) along which the fifth hinging element (28) substantially extends, while between the thus formed two intersections (36) a part of the fifth hinging element (28) is located.

13. A collapsible container according to any one of the preceding claims, wherein at least a number of hinging elements (8, 10, 12, 26, 28, 34) are living hinges, the hinging elements being at least liquid-tight, the arrangement being such that the container, at least in folded-out position, can contain liquid.

14. A collapsible container according to any one of the preceding claims, wherein at least a number of hinging elements (8, 10, 12, 26, 28, 34) are film hinges, the hinging elements being at least liquid-tight, the arrangement being such that the container, at least in folded-out condition, can contain liquid.

15. A collapsible container according to any one of the preceding claims, wherein the hinges (8, 10, 12, 26, 28, 34, 50) are placed and designed such, while the direction of hinging is defined such, that the outside of the container (1), at least at the location of the hinging elements, is substantially flat, at least smooth.

16. A collapsible container according to any one of the preceding claims, wherein the hinges (8, 10, 12, 26, 28, 34, 50) are placed such and designed such, while the direction of hinging is defined such, that the inside of the container, at least at the location of the hinging elements, is substantially flat, at least smooth.

17. A collapsible container according to any one of the preceding claims, wherein the first (4) and second walls (6) are foldable such that they remain within the contours of the bottom (2).

18. A collapsible container according to any one of the preceding claims, wherein the bottom (2) is somewhat convex, at least truncated cone- or pyramid-shaped in the direction of the inside space of the container (1) in folded-out condition.

19. A mold (60) for injection molding a collapsible container (1) according to one of claims 1-18, wherein the mold (60) comprises at least one mold cavity (64), provided with a bottom forming part (65) and at least four sidewall forming parts (66), each of the sidewall forming parts (66) being connected to the bottom forming part (65) via first hinging element forming parts (67) and to at least two other sidewall forming parts via second hinging element forming parts (66), while in at least two sidewall forming parts means (68) are provided for forming third hinging elements, which extend at an inclination relative to the first and second hinging element forming parts.

20. A mold according to claim 19, wherein at least one core (63) is provided between the sidewall forming parts (66), and at least the means for forming the second hinging elements extend at least partly from the core (63) in the respective sidewall forming parts and are arranged so as to be moveable.

21. A method for forming a collapsible container according to one of claims 1-18, provided with a bottom an at least four sidewalls hingedly connected thereto, which sidewalls are hingedly interconnected, while a mold with at least one mold cavity is used having the shape of the folded-out container, into which mold cavity plastic is introduced with the aid of injection-molding technique, such that in the at least one mold cavity a collapsible container in folded-out condition is injection-molded, while in at least two sidewalls located opposite each other hinging elements are integrally formed, such that the respective sidewalls are foldable.

## Patentansprüche

1. Zusammenlegbarer Behälter (1), in welchem die Seitenwände (4) schwenkbar miteinander und mit dem Boden (2) verbunden sind und in welchem wenigstens zwei Seitenwände (4) des Behälters (1) faltbar sind,
**dadurch gekennzeichnet,**
**dass** der Behälter mittels Spritzguss aus Kunststoff mit integrierten Scharnieren hergestellt ist.

2. Zusammenlegbarer Behälter nach Anspruch 1, versehen mit einem Boden (2) und wenigstens zwei ersten, einander gegenüberliegend angeordneten Seitenwänden (4) und zwei zweiten, einander gegenüberliegend angeordneten Seitenwänden (6), wobei die ersten (4) und die zweiten Seitenwände (6) mit dem Boden (2) über erste Scharnierelemente (8) verbunden sind, während zu jeder Zeit eine erste Seitenwand (4) mit einer zweiten Seitenwand (6) mittels wenigstens eines zweiten Scharnierelementes (10) verbunden ist, wobei in wenigstens zwei ersten Seitenwänden (4) Scharnierelemente (12, 26) derart vorgesehen sind, dass die ersten Seitenwände (4) wenigstens teilweise zusammengefaltet werden können und die zweiten Seitenwände (6) in eine Richtung des Bodens (2) geschwenkt werden können, um den Behälter (1) aufzufalten.

3. Zusammenlegbarer Behälter nach Anspruch 1 oder 2, in welchem in den ersten Seitenwänden (4) durch zweite Scharnierelemente (10) und dritte Scharnierelemente (12) im Wesentlichen dreieckige Wandoberflächen (20) begrenzt werden, wobei wenigstens ein viertes Scharnierelement (26), das sich bei einem Behälter (1) in aufgefaltetem Zustand näherungsweise in rechten Winkeln zur Bodenoberfläche (2) erstreckt, und wenigstens zwei dritte Scharnierelemente (12) vorgesehen sind, die sich aus dem Bereich einer Schnittlinie (16, 32) zwischen der Bodenoberfläche oder einer oberen Kante der ersten Seitenwand (4) und dem oder einem dritten, einen Winkel (α) mit dem Boden (2) und dem vierten Scharnierelement (26) einschließenden Scharnierelement (12) heraus erstrecken und sich wenigstens bis zu einem Punkt in der Nähe zum benachbarten zweiten Scharnierelement erstrecken.

4. Behälter nach Anspruch 3, in welchem die vierten Scharnierelemente (26) in einander gegenüberliegend angeordneten ersten Seitenwänden (4) angeordnet sind und miteinander über ein fünftes im Boden angeordnetes Scharnierelement (28) verbunden sind.

5. Zusammenlegbarer Behälter nach Anspruch 3 oder 4, in welchem in jeder ersten Wand (4) ein viertes Scharnierelement (26) vorgesehen ist, während zwei dritte Scharnierelemente (12) sich in einander entgegengesetzte Richtungen von der Schnittlinie der Bodenoberfläche (2) oder der oberen Kante und dem entsprechenden vierten Scharnierelement (26) derart erstrecken, dass die entsprechende erste Seitenwand (4) wenigstens eine im Wesentlichen dreieckige erste Wandoberfläche (20, 22) auf beiden Seiten des vierten Scharnierelementes (26) aufweist, eingeschlossen durch ein zweites Scharnierelement (10) und ein erstes Scharnierelement (8) oder ein viertes Scharnierelement (26), während darüber hinaus auf beiden Seiten des vierten Scharnierelementes (26) eine zweite Wandoberfläche (22, 20) vorgesehen ist, die wenigstens durch ein entsprechendes viertes Scharnierelement (26) und ein drittes Scharnierelement (12) begrenzt wird.

6. Zusammenlegbarer Behälter nach Anspruch 5, in welchem jede erste Wandoberfläche (20, 22) im Wesentlichen ein gleichseitiges Dreieck ist.

7. Zusammenlegbarer Behälter nach Anspruch 5 oder 6, in welchem jede zweite Wandoberfläche im Wesentlichen ein Viereck ist und insbesondere eine trapezartige Form besitzt.

8. Zusammenlegbarer Behälter nach Anspruch 5 oder 6, in welchem jede erste und jede zweite Wandoberfläche (20, 22) im Wesentlichen dreieckig, insbesondere in der Form eines gleichseitigen Dreiecks, ist.

9. Zusammenlegbarer Behälter nach einem der vorstehenden Ansprüche, in welchem in dem Boden (2) wenigstens ein fünftes Scharnierelement (28) eingeschlossen ist, welches sich im Wesentlichen längs einer Linie zwischen den vierten Scharnierelementen (26) und/oder den Schnittlinien (24, 32) zwischen den dritten Scharnierelementen (12) und den ersten Scharnierelementen (8) erstreckt.

10. Zusammenlegbarer Behälter nach Anspruch 9, in welchem in der Oberfläche des Bodens (2) im Anschluss an das erste Scharnierelement (8) an den ersten Seitenwänden (4) zwei erste Bodenoberflächen (38), jeweils durch ein sechstes Scharnierelement (34), das entsprechende erste Scharnierelement (8) und das fünfte Scharnierelement (28) begrenzt werden.

11. Zusammenlegbarer Behälter nach Anspruch 10, in welchem die ersten Bodenoberflächen (38) im Wesentlichen dreieckig, insbesondere in der Form eines gleichseitigen Dreiecks, sind.

12. Zusammenlegbarer Behälter nach einem der Ansprüche 9 oder 11, in welchem nahe einer jeden ersten Seitenwand (4) in dem Boden (2) zwei erste Bodenoberflächen (38) vorgesehen sind, die jeweils von wenigstens einem sechsten Scharnierelement (34) begrenzt werden, welche sechsten Scharnierelemente (34) sich an einer Schnittlinie (36) auf der Linie (28) schneiden, längs welcher sich das fünfte Scharnierelement (28) im Wesentlichen erstreckt, während zwischen den auf diese Weise gebildeten zwei Schnittlinien (36) ein Teil des fünften Scharnierelementes (28) angeordnet ist.

13. Zusammenlegbarer Behälter nach einem der vorstehenden Ansprüche, in welchem wenigstens eine Anzahl von Scharnierelementen (8, 10, 12, 26, 28, 34) Filmscharniere (living hinges) sind, welche Scharnierelemente wenigstens flüssigkeitsdicht sind, wobei diese Anordnung derart ist, dass der Behälter wenigstens in seiner aufgefalteten Stellung Flüssigkeit enthalten kann.

14. Zusammenlegbarer Behälter nach einem der vorstehenden Ansprüche, in welchem wenigstens eine Anzahl von Scharnierelementen (8, 10, 12, 26, 28, 34) Filmscharniere (film hinges) sind, welche Scharnierelemente wenigstens flüssigkeitsdicht sind, wobei diese Anordnung derart ist, dass der Behälter wenigstens in seiner aufgefalteten Stellung Flüssigkeit enthalten kann.

15. Zusammenlegbarer Behälter nach einem der vorstehenden Ansprüche, in welchem die Scharniere (8, 10, 12, 26, 28, 34, 50) derart angeordnet und aufgebaut und die Richtung des Scharnieres so gebildet ist, dass die Außenseite des Behälters (1) wenigstens an dem Ort der Scharnierelemente im Wesentlichen flach ist, zumindest glatt.

16. Zusammenlegbarer Behälter nach einem der vorstehenden Ansprüche, in welchem die Scharniere (8, 10, 12, 26, 28, 34, 50) derart angeordnet und aufgebaut und die Richtung des Scharnieres so gebildet ist, dass die Innenseite des Behälters wenigstens an dem Ort der Scharnierelemente im Wesentlichen flach ist, zumindest glatt.

17. Zusammenlegbarer Behälter nach einem der vorstehenden Ansprüche, in welchem die ersten (4) und zweiten Wände (6) derart faltbar sind, dass sie innerhalb der Konturen des Bodens (2) verbleiben.

18. Zusammenlegbarer Behälter nach einem der vorstehenden Ansprüche, in welchem der Boden (2) etwas konvex ist, zumindest in der Form eines stumpfen Kegels oder einer Pyramide in der Richtung zum inneren Raum des Behälters (1) in dem aufgefalteten Zustand.

19. Gießform (60) für das Spritzgießen eines zusammenlegbaren Behälters (1) nach einem der Ansprüche 1 bis 18, in welchem die Gießform (60) wenigstens eine Formausnehmung (64) aufweist, die mit einem einen Boden formenden Teil (65) und wenigstens vier eine Seitenwand bildenden Teilen (66) versehen ist, von denen alle eine Seitenwand bildenden Teile (66) mit dem einen Boden bildenden Teil (65) mittels erste Scharnierelemente bildender Teile (67) verbunden sind und mit wenigstens zwei anderen eine Seitenwand bildenden Teilen mittels zweite Scharnierelemente bildender Teile (66) verbunden sind, während in wenigstens zwei eine Seitenwand bildenden Teilen Einrichtungen (68) vorgesehen sind, die dritte Scharnierelemente bilden sollen, die in einer Neigung relativ zu den erste und zweite Scharnierelemente bildenden Teilen verlaufen.

20. Gießform nach Anspruch 19, in welcher wenigstens ein Kern (63) zwischen den eine Seitenwand bildenden Teilen (66) vorgesehen ist und wenigstens eine Einrichtung zum Bilden der zweiten Scharnierelemente sich wenigstens teilweise von dem Kern (63) in die entsprechenden eine Seitenwand bildenden Teile erstreckt und so angeordnet ist, dass sie beweglich ist.

21. Verfahren zum Bilden eines zusammenlegbaren Behälters nach einem der Ansprüche 1 bis 18, versehen mit einem Boden und wenigstens vier scharniermäßig damit verbundenen Seitenwänden, welche Seitenwände miteinander über Scharniere verbunden sind, während eine Gießform mit wenigstens einer Gießformausnehmung verwendet wird, die die Form des aufgefalteten Behälters besitzt, in welche Gießformausnehmung Kunststoff mittels eines Spritzgussverfahrens eingeführt wird, sodass in wenigstens einer Gießformausnehmung ein zusammenlegbarer Behälter in aufgefaltetem Zustand spritzgegossen wird, während in wenigstens zwei einander gegenüberliegenden Seitenwänden, Scharnierelemente integriert derart ausgebildet werden, dass die entsprechenden Seitenwände faltbar sind.

## Revendications

1. Récipient pliable (1), dans lequel les parois latérales (4) sont raccordées par pivotement l'une à l'autre et au fond (2) et dans lequel au moins deux parois latérales (4) du récipient (1) sont pliables, **caractérisé en ce que** le récipient est fabriqué par moulage par injection de matériau plastique ayant des charnières intégrées.

2. Récipient pliable selon la revendication 1, pourvu d'un fond (2) et d'au moins deux premières parois latérales (4) agencées en regard l'une de l'autre et de deux secondes parois latérales (6) agencées en regard l'une de l'autre, les première (4) et seconde parois (6) étant raccordées au fond (2) via des premiers éléments d'articulation (8), tandis qu'à chaque fois, une première paroi latérale (4) est raccordée à une seconde paroi latérale (6) par au moins un second élément d'articulation (10), dans lequel il y a dans au moins deux premières parois latérales (4) des éléments d'articulation (12, 26) de sorte que les premières parois latérales (4) puissent être repliées ensemble au moins partiellement et que les secondes parois latérales (6) puissent pivoter dans la direction du fond (2) pour replier le récipient (1).

3. Récipient pliable selon la revendication 1 ou 2, dans lequel, dans les premières parois latérales (4), des surfaces de paroi sensiblement triangulaires (20) sont délimitées par des seconds éléments d'articulation (10) et par des troisièmes éléments d'articulation (12), dans lequel il est prévu au moins un quatrième élément d'articulation (26) qui s'étend, lorsque le récipient (1) est à l'état déployé, approximativement à angles droits par rapport à la surface de fond (2) et au moins deux troisièmes éléments d'articulation (12) s'étendant d'un point proche de l'intersection (16, 32) entre la surface du fond ou un bord supérieur de la première paroi latérale (4) et le ou un troisième élément d'articulation (12), qui incluent un angle (α) avec ledit fond (2) et ledit quatrième élément d'articulation (26) et s'étendent au moins jusqu'à un point proche du second élément d'articulation adjacent.

4. Récipient selon la revendication 3, dans lequel lesdits quatrièmes éléments d'articulation (26) situés dans les premières parois latérales (4) disposées en regard sont interconnectés par un cinquième élément d'articulation (28) situé au fond.

5. Récipient pliable selon la revendication 3 ou 4, dans lequel il est prévu, dans chaque première paroi (4), un quatrième élément d'articulation (26), tandis que deux troisièmes éléments d'articulation (12) s'étendent dans des sens opposés à partir de l'intersection de la surface de fond (2) ou ledit bord supérieur et le quatrième élément d'articulation respectif (26) de sorte que la première paroi latérale respective (4) comprenne au moins une première surface de paroi sensiblement triangulaire (20, 22), sur les deux côtés du quatrième élément d'articulation (26), entourée d'un second élément d'articulation (10) et d'un premier élément d'articulation (8) ou d'un quatrième élément d'articulation (26), tandis qu'en outre, il est prévu, sur les deux côtés du quatrième élément d'articulation (26), une seconde surface de paroi (22, 20) au moins délimitée par le quatrième élément d'articulation respectif (26) et un troisième élément d'articulation (12).

6. Récipient pliable selon la revendication 5, dans lequel chaque première surface de paroi (20, 22) forme sensiblement un triangle équilatéral.

7. Récipient pliable selon la revendication 5 ou 6, dans lequel chaque seconde surface de paroi forme sensiblement un quadrilatère et présente en particulier une forme trapézoïdale.

8. Récipient pliable selon la revendication 5 ou 6, dans lequel chaque première et chaque seconde surface de paroi (20, 22) sont sensiblement triangulaires, en particulier sous la forme d'un triangle équilatéral.

9. Récipient pliable selon l'une quelconque des revendications précédentes, dans lequel il est inclus dans le fond (2) au moins un cinquième élément d'articulation (28) qui s'étend sensiblement le long d'une ligne entre les quatrièmes éléments d'articulation (26) et/ou les intersections (24, 32) entre les troisièmes éléments d'articulation (12) et les premiers éléments d'articulation (8).

10. Récipient pliable selon la revendication 9, dans lequel, dans la surface du fond (2) contiguë au premier élément d'articulation (8), sur les premières parois latérales (4), deux premières surfaces de fond (38) sont chacune délimitées par un sixième élément d'articulation (34), le premier élément d'articulation respectif (8) et le cinquième élément d'articulation (28).

11. Récipient pliable selon la revendication 10, dans lequel les premières surfaces de fond (38) sont sensiblement triangulaires et présentent en particulier la forme d'un triangle équilatéral.

12. Récipient pliable selon l'une quelconque des revendications 9 ou 11, dans lequel près de chaque première paroi latérale (4), dans le fond (2), il est prévu deux premières surfaces de fond (38), chacune délimitée par au moins un sixième élément d'articulation (34), les sixièmes éléments d'articulation (34) découpant à une intersection (36) sur la ligne (28) le long de laquelle le cinquième élément d'articulation (28) s'étend sensiblement, tandis qu'entre les deux intersections ainsi formées (36) est située une partie du cinquième élément d'articulation (28).

13. Récipient pliable selon l'une quelconque des revendications précédentes, dans lequel au moins un certain nombre d'éléments d'articulation (8, 10, 12, 26, 28, 34) sont des charnières vives, les éléments d'articulation étant au moins étanches aux liquides, l'agencement étant tel que le récipient, au moins à l'état déployé, puisse contenir un liquide.

14. Récipient pliable selon l'une quelconque des revendications précédentes, dans lequel au moins un certain nombre d'éléments d'articulation (8, 10, 12, 26, 28, 34) sont des articulations en film, les éléments d'articulation étant au moins étanches aux liquides, l'agencement étant tel que le récipient, au moins à l'état déployé, puisse contenir un liquide.

15. Récipient pliable selon l'une quelconque des revendications précédentes, dans lequel les charnières (8, 10, 12, 26, 28, 34, 50) sont placées et configurées et la direction de l'articulation est définie de sorte que l'extérieur du récipient (1), au moins à l'emplacement des éléments d'articulation, soit sensiblement plat, au moins lisse.

16. Récipient pliable selon l'une quelconque des revendications précédentes, dans lequel les charnières (8, 10, 12, 26, 28, 34, 50) sont placées et configurées et la direction de l'articulation est définie de sorte que l'intérieur du récipient, au moins à l'emplacement des éléments d'articulation, soit sensiblement plat, au moins lisse.

17. Récipient pliable selon l'une quelconque des revendications précédentes, dans lequel les premières (4) et secondes (6) parois sont pliables de sorte qu'elles restent à l'intérieur des contours du fond (2).

18. Récipient pliable selon l'une quelconque des revendications précédentes, dans lequel le fond (2) est de forme légèrement convexe, au moins en cône tronqué ou en pyramide tronquée dans la direction de l'espace interne du récipient (1) à l'état déployé.

19. Moule (60) pour moulage par injection d'un récipient pliable (1) selon l'une quelconque des revendications 1 à 18, dans lequel le moule comprend au moins une cavité de moulage (64), pourvue d'une partie (65) formant le fond et d'au moins quatre parties (66) formant les parois latérales, chacune des parties (66) formant les parois latérales étant raccordée à la partie (65) formant le fond via des parties (67) formant les premiers éléments d'articulation et à au moins deux autres parties formant les parois latérales via des parties (66) formant les seconds éléments d'articulation, tandis que, dans au moins deux parties formant les parois latérales, il est prévu des moyens (68) pour former des troisièmes éléments d'articulation qui s'étendent sous une certaine inclinaison par rapport aux parties formant les premiers et seconds éléments d'articulation.

20. Moule selon la revendication 19, dans lequel au moins un noyau (63) est prévu entre les parties (66) formant les parois latérales et au moins les moyens pour former les seconds éléments d'articulation s'étendent au moins partiellement à partir du noyau (63) dans les parties respectives formant les parois latérales et sont agencés de manière amovible.

21. Procédé pour former un récipient pliable selon l'une quelconque des revendications 1 à 18, pourvu d'un fond et d'au moins quatre parois latérales qui lui sont raccordées par articulation, ces parois latérales étant interconnectées par articulation, tandis que l'on utilise un moule avec au moins une cavité de moulage présentant la forme du récipient déployé, dans lequel on introduit un matériau synthétique dans la cavité de moulage à l'aide d'une technique de moulage par injection de manière à ce que, dans ladite au moins une cavité de moulage, un récipient pliable à l'état déployé soit moulé par injection, tandis que des éléments d'articulation sont formés d'un seul tenant dans au moins deux parois latérales en regard l'une de l'autre de sorte que les parois latérales respectives soient pliables.
